# FASCICULE DE BREVET EUROPEEN

(11) **EP 2 205 487 B1**
(45) Date de publication et mention de la délivrance du brevet: **04.07.2012**
(21) Numéro de dépôt: 08842482.5
(22) Date de dépôt: 20.06.2008
(51) Int. Cl.: B64F 5/00, B66F 11/04

(54) **CHARIOT DE MAINTENANCE POUR ENTREE D'AIR DE NACELLE POUR TURBOREACTEUR D'AERONEF**
LUFTEINTRITTSWARTUNGSWAGEN FÜR EINE TRIEBWERKSGONDEL EINES FLUGZEUGES
MAINTENANCE TROLLEY FOR A NACELLE AIR INTAKE OF AN AIRCRAFT TURBOJET ENGINE

(30) Priorité: 23.10.2007 FR 0707399
(43) Date de publication de la demande: 14.07.2010
(73) Titulaire: Aircelle, 76700 Gonfreville l'Orcher (FR)
(72) Inventeur: VAUCHEL, Guy, F-76600 Le Havre (FR); DAUGUET, Jean-Philippe, F-31170 Tournefeuille (FR); BEILLIARD, Stéphane, F-31300 Toulouse (FR)
(74) Mandataire: Gaillarde, Frédéric F. Ch.
(86) Numéro de dépôt international: PCT/FR2008/000865
(87) Numéro de publication internationale: WO 2009/053539

(56) Documents cités:
- EP-A- 1 348 626
- DE-U1- 9 307 330
- GB-A- 742 771
- US-A- 4 520 996

## Description

La présente invention se rapporte à un chariot de maintenance pour entrée d'air de nacelle pour turboréacteur d'aéronef.

Un tel chariot est connu par exemple de DE9307330U, qui montre toutes les caractéristiques du préambule de la revendication 1.

Comme cela est connu en soi, une nacelle pour turboréacteur d'aéronef comprend une partie amont appelée couramment « entrée d'air », suivi d'une partie médiane et d'une partie aval.

La partie aval enveloppe la partie moteur du turboréacteur, la partie médiane enveloppe la soufflante de ce turboréacteur, et l'entrée d'air permet de canaliser l'air extérieur vers la soufflante puis vers le moteur.

Certaines opérations de maintenance telles que la vérification de l'état des aubes de la soufflante, nécessitent la pénétration d'un opérateur à l'intérieur de l'entrée d'air.

Une telle pénétration est délicate, d'une part car elle s'effectue dans une zone non plane où l'opérateur peut avoir du mal à maintenir son équilibre, et d'autre part car elle peut entraîner l'endommagement, sous le poids de l'opérateur, de certains organes sensibles disposés à l'intérieur de l'entrée d'air tels que des panneaux d'absorption acoustique.

Ainsi, la présente invention a notamment pour but de fournir des moyens permettant à un opérateur d'accéder à l'intérieur d'une entrée d'air de nacelle sans que cela présente les inconvénients susmentionnés.

On atteint ce but de l'invention avec un chariot de maintenance pour entrée d'air de nacelle pour turboréacteur d'aéronef, remarquable en ce qu'il comprend une base et un plateau monté en porte-à-faux sur cette base, adapté pour pénétrer sans contact à l'intérieur de ladite entrée d'air.

Grâce à la présence d'un tel plateau, un opérateur peut pénétrer de manière tout à fait stable à l'intérieur de l'entrée d'air, sans risque d'endommager des organes situés à l'intérieur de cette entrée d'air et un berceau de support de ladite entrée d'air, monté sur ladite base, et de hauteur réglable.

Suivant d'autres caractéristiques optionnelles du chariot selon l'invention :
- ladite entrée d'air comprenant une lèvre et ledit turboréacteur comprenant une soufflante, la longueur de la partie en porte-à-faux dudit plateau est au moins égale à la distance horizontale séparant le bord inférieur de ladite lèvre des aubes de ladite soufflante, diminuée d'une distance minimale de sécurité de l'extrémité de ladite partie en porte-à-faux par rapport auxdites aubes, et augmentée d'une distance minimale de butée dudit chariot contre ladite lèvre : grâce à une telle longueur, on s'assure que le plateau, tout en permettant un accès jusqu'aux aubes de la soufflante, ne risque pas de buter et d'endommager ces aubes ;
- la longueur dudit plateau est sensiblement égale à la distance horizontale séparant le bord inférieur de ladite lèvre des aubes de ladite soufflante lorsque ladite entrée d'air se trouve en position de fonctionnement, diminuée de ladite distance minimale de sécurité et augmentée de ladite distance minimale de butée : ce mode de réalisation permet d'atteindre les aubes de la soufflante en toute sécurité lorsque l'entrée d'air se trouve en position de fonctionnement,
- dans le cas où ladite entrée d'air comprend une virole acoustique fixée sur un carter de ladite soufflante et une structure externe intégrant ladite lèvre, montée coulissante par rapport à ladite virole acoustique entre une position de fonctionnement, dans laquelle ladite lèvre vient dans le prolongement de ladite virole acoustique, et une position extrême de maintenance, dans laquelle ladite lèvre est écartée de ladite virole acoustique, la longueur dudit plateau est sensiblement égale à la distance horizontale séparant le bord inférieur de ladite lèvre des aubes de ladite soufflante lorsque ladite structure externe se trouve dans sa position extrême de maintenance, diminuée de ladite distance minimale de sécurité et augmentée de ladite distance minimale de butée : ce mode de réalisation permet d'atteindre les aubes de la soufflante en toute sécurité tant lorsque l'entrée d'air se trouve en position de fonctionnement que lorsqu'elle se trouve en position de maintenance ;
- dans le cas où ladite entrée d'air comprend une virole acoustique fixée sur un carter de ladite soufflante et une structure externe intégrant ladite lèvre montée coulissante par rapport à ladite virole acoustique entre une position de fonctionnement, dans laquelle ladite lèvre vient dans le prolongement de ladite virole acoustique, et une position extrême de maintenance, dans laquelle ladite lèvre est écartée de ladite virole acoustique, ledit plateau comprend un tiroir mobile entre une position rétractée conférant audit plateau une longueur sensiblement égale à la distance horizontale séparant le bord inférieur de ladite lèvre des aubes de ladite soufflante lorsque ladite structure externe se trouve dans sa position de fonctionnement normal, diminuée de ladite distance minimale de sécurité et augmentée de ladite distance minimale de butée, et une position étirée conférant audit plateau une longueur sensiblement égale à la distance horizontale séparant le bord inférieur de ladite lèvre des aubes de ladite soufflante lorsque ladite structure externe se trouve dans sa position extrême de maintenance, diminuée de ladite distance minimale de sécurité et augmentée de ladite distance minimale de butée : ce mode de réalisation constitue une alternative intéressante au mode de réalisation précédent, permettant d'une part d'adapter la longueur du plateau à la position (intermédiaire ou extrême) de maintenance de l'entrée d'air, et d'autre part de diminuer l'encombrement global du chariot en situation de garage ;
- le chariot selon l'invention comprend des moyens d'indexation de la position dudit tiroir : ces moyens permettent de prévenir tout mouvement de coulissement intempestif du tiroir par rapport au plateau ;
- le chariot selon l'invention comprend un berceau de support de ladite entrée d'air, de hauteur réglable : grâce à un tel berceau, on peut utiliser le chariot selon l'invention pour des opérations de manutention, de sorte qu'il n'est pas nécessaire de recourir à un outillage spécifique pour de telles opérations ;
- ledit berceau comprend un point d'appui arrière et deux points d'appui latéraux situés aux extrémités de deux bras symétriques : cette disposition permet de réaliser une manutention isostatique de l'entrée d'air ;
- lesdits bras sont mobiles entre une position déployée et une position repliée : cette caractéristique permet de limiter l'encombrement du chariot lorsqu'on ne souhaite pas mettre en oeuvre les moyens de manutention ;
- lesdits bras sont réglables de manière à pouvoir coopérer tant avec ladite structure externe qu'avec ladite virole acoustique ;
- ledit plateau est agencé par rapport à ladite base de manière que la projection au sol du centre de gravité de l'ensemble formé par ledit plateau et un opérateur circulant sur ce plateau, soit situé à l'intérieur du polygone défini par les points d'appui de ladite base sur le sol : cet agencement permet un stabilité optimale du chariot lorsqu'un opérateur circule sur le plateau ;
- le chariot selon l'invention comprend des moyens pour faire rouler ladite base sur le sol : de tels moyens de roulement facilitent les déplacements du chariot ;
- le chariot selon l'invention comprend des moyens pour freiner lesdits moyens de roulement: ces moyens de freinage permettent d'immobiliser le chariot lors de l'intervention d'un opérateur à l'intérieur de l'entrée d'air, augmentant ainsi la sécurité de cet opérateur et limitant les risques de choc du chariot sur l'entrée d'air ;
- le chariot selon l'invention comprend un escalier pour accéder audit plateau : un tel escalier permet à un opérateur d'accéder aisément au plateau ;
- le chariot selon l'invention comprend un garde-corps au moins dans la zone dudit plateau : un tel garde-corps permet de limiter les risques de chute de l'opérateur.

D'autres caractéristiques et avantages de la présente invention apparaîtront à la lumière de la description qui va suivre, et à l'examen des figures ci-annexées, dans lesquelles :
- la figure 1 représente de manière schématique un chariot selon un premier mode de réalisation de l'invention, coopérant avec une entrée d'air se trouvant dans une position de fonctionnement normal,
- la figure 2 se différencie de la figure 1 en ceci que l'entrée d'air se trouve en position intermédiaire de maintenance,
- la figure 3 se différencie des deux précédentes en ceci que l'entrée d'air se trouve en position extrême de maintenance,
- la figure 4 est une vue de la situation de la figure 1 prise selon la direction axiale, c'est-à-dire selon la direction IV de la figure 1,
- les figures 5 et 6 sont des vues analogues respectivement aux vues 1 et 3 d'un deuxième mode de réalisation selon l'invention,

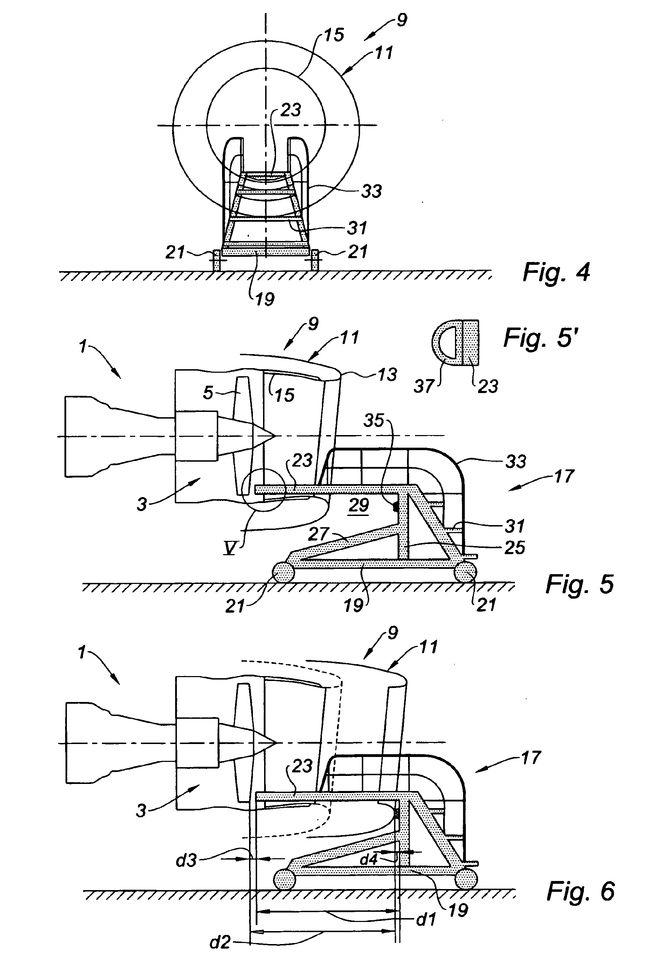

- la figure 5' est une vue de détail de la zone V de la figure 5,

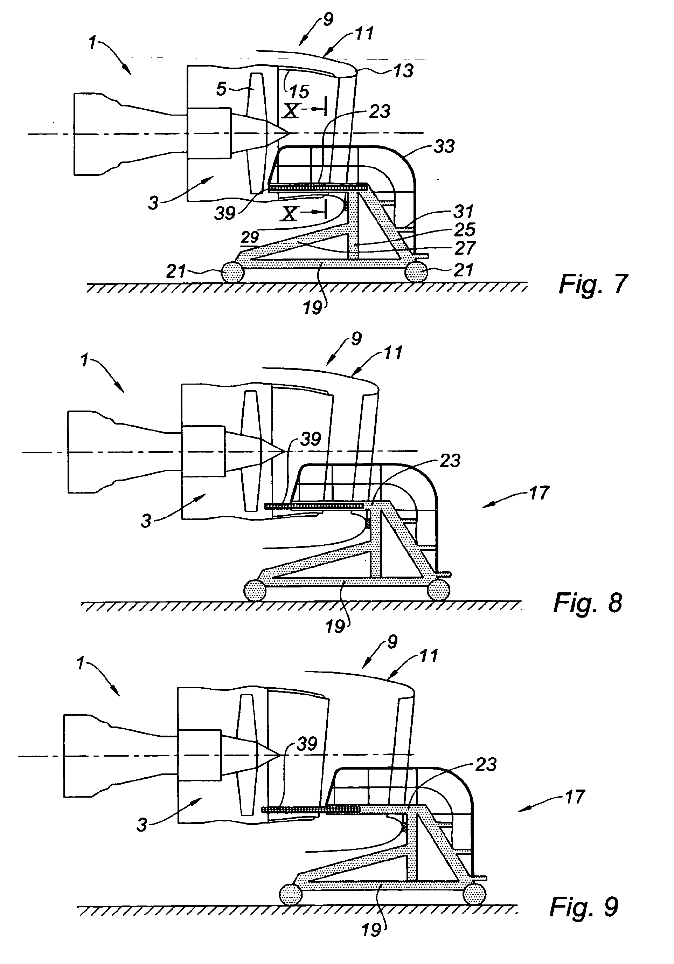

- les figures 7 à 9 sont des vues analogues respectivement aux vues 1 à 3 d'un troisième mode de réalisation de l'invention,

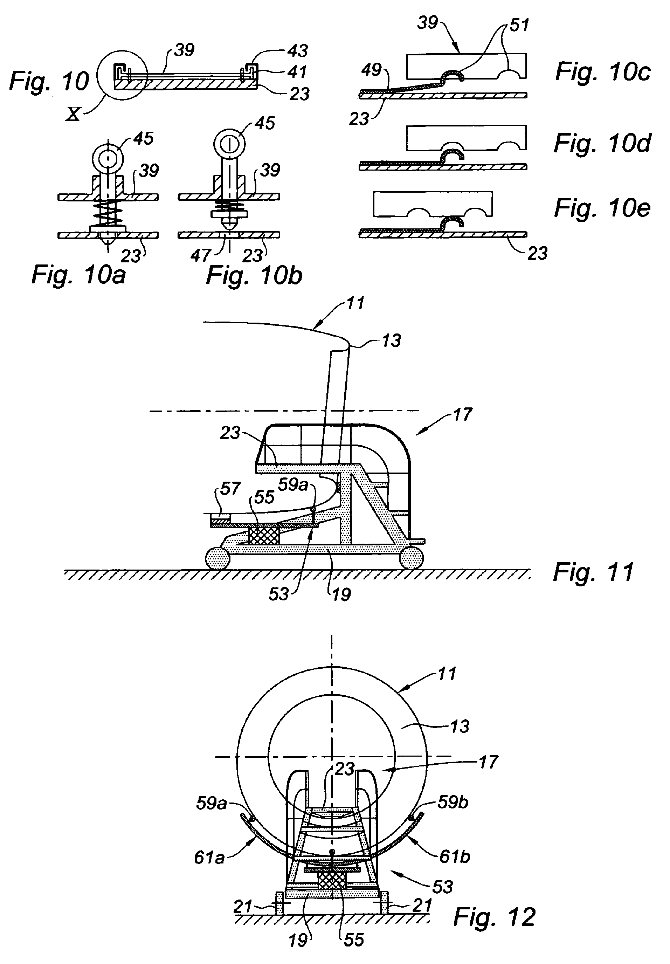

- la figure 10 est une vue en coupe prise selon la ligne X du plateau du chariot de la figure 7,
- les figures 10a et 10b représentent une première variante de moyens de verrouillage du tiroir du plateau du chariot de la figure 7, respectivement en position verrouillée et déverrouillée,
- les figures 10c, 10d, 10e représentent une deuxième variante de ces moyens de verrouillage, respectivement dans une première position de verrouillage, en position déverrouillée et en position intermédiaire,
- les figures 11 et 12 représentent, respectivement de côté et en vue axiale, un chariot selon l'invention équipé de moyens de manutention d'une entrée d'air de nacelle,

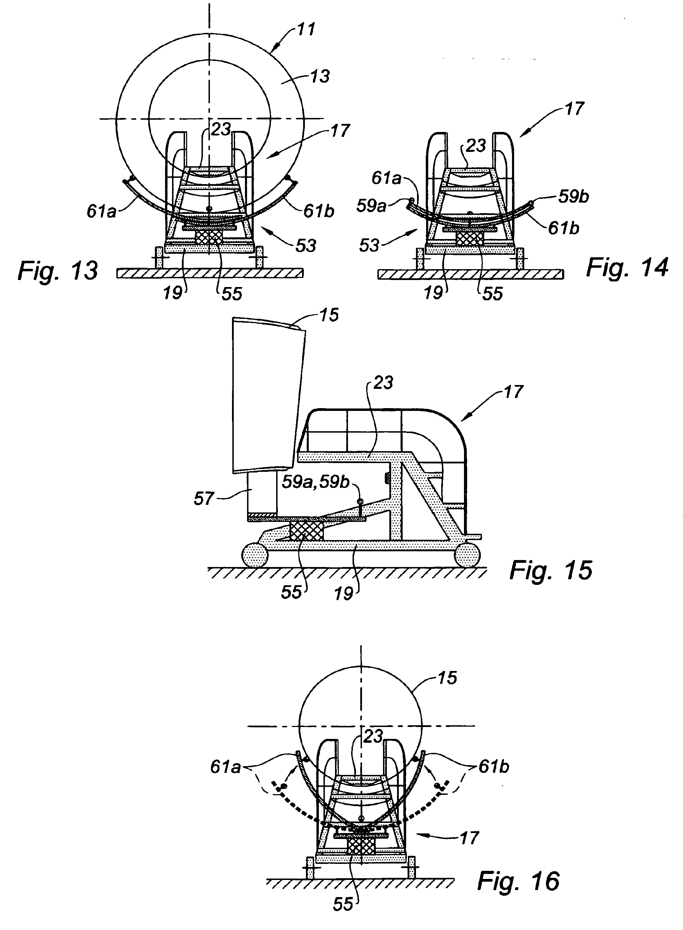

- les figures 13 et 14 représentent, en vue axiale, une variante dans laquelle ces moyens de manutention sont mobiles entre une position déployée (figure 13) et une position repliée (figure 14), et
- les figures 15 et 16 représentent, respectivement, en vue de côté et axiale, un chariot selon l'invention dans lequel lesdits moyens de manutention sont adaptés pour coopérer avec une virole acoustique d'une entrée d'air de nacelle.

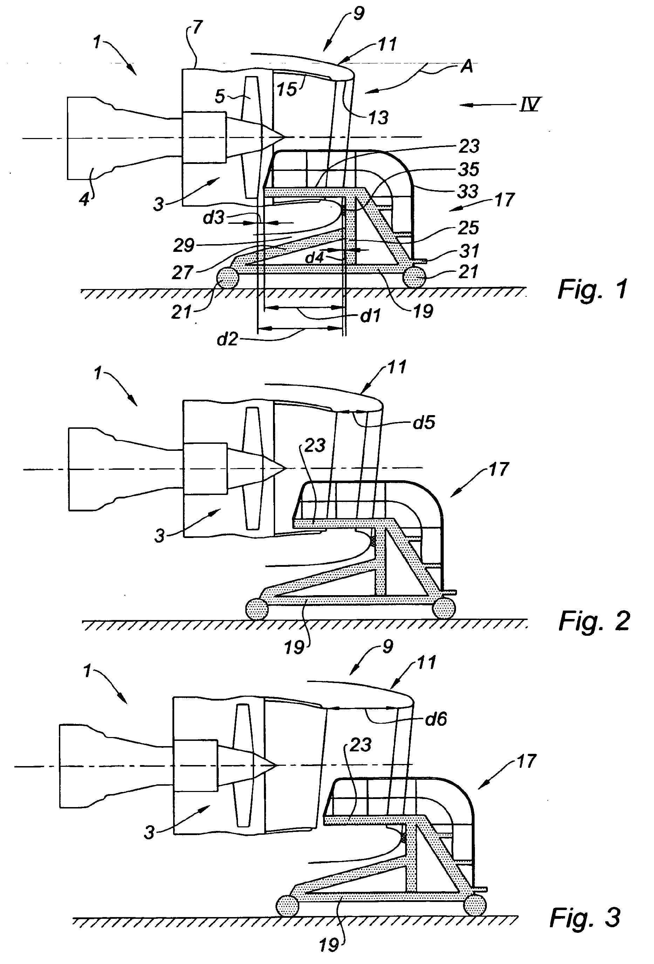

On se reporte à présent à la figure 1, sur laquelle on a représenté un turboréacteur 1 d'aéronef, comprenant en amont une soufflante 3 et en aval un moteur à proprement parler 4.

La soufflante 3 comprend des aubes 5 susceptibles de tourner à grande vitesse à l'intérieur d'un carter de soufflante 7, permettant d'aspirer de l'air extérieur de l'amont vers l'aval du turboréacteur, c'est-à-dire de la droite de la figure 1 vers la gauche de cette figure, selon la direction indiquée par la flèche A.

Autour du carter de soufflante 7, et amont de celui-ci, se trouve une entrée d'air 9, c'est-à-dire une partie de la nacelle du turboréacteur 1 permettant de canaliser l'air extérieur vers la soufflante 3.

Bien que cela ne soit nullement limitatif, cette entrée d'air 9 peut être conforme à l'enseignement de la demande de brevet FR06/08599, déposée par la demanderesse le 2 octobre 2006.

Dans ce cas, l'entrée d'air 9 comporte une structure externe 11 intégrant une lèvre 13, ainsi qu'une virole acoustique 15. Une telle entrée d'air est souvent désignée par « capot amont de nacelle » et permet d'excellentes performances aérodynamiques du fait de l'intégration de la lèvre à la structure externe.

Plus précisément, et comme cela est visible notamment sur les figures 2 et 3, la structure externe 11 est montée coulissante par rapport à la virole acoustique 15 entre une position de fonctionnement normal (figure 1), et des positions de maintenance intermédiaire (figure 2) et extrême (figure 3).

La virole acoustique 15, qui consiste quant à elle en un volume sensiblement cylindrique défini par des panneaux d'absorption acoustique, est reliée de manière fixe au carter de soufflante 7 par des moyens de liaison appropriés tels que des brides (non représentées).

On notera sur les figures 1 à 3 un premier mode de réalisation d'un chariot 17 selon l'invention. Ce chariot comprend une base 19 montée sur des roues 21, cette base supportant un plateau 23 grâce à un ou plusieurs poteau(x) 25, et à un équerrage 27 approprié.

Plus précisément, le plateau 23 est monté en porte-à-faux par rapport à la base 19, c'est-à-dire que ce plateau définit une zone 29 dans laquelle la partie inférieure de la structure externe 11 peut s'introduire.

Un escalier 31 permet à un opérateur d'accéder au plateau 23, un garde-corps 33 permettant quant à lui d'éviter les chutes de cet opérateur.

De manière plus précise, la longueur du plateau 23, c'est-à-dire la distance d1 séparant les poteaux 25 de l'extrémité 23 de ce plateau, est de préférence sensiblement égale à la distance horizontale d2 séparant le bord inférieur de la lèvre 11 des aubes 5 de la soufflante 3, diminuée d'une distance minimale de sécurité d3 de l'extrémité du plateau 23 par rapport aux aubes 5, et augmentée d'une distance minimale de butée d4 des poteaux 25 contre le bord inférieur de la lèvre 11.

La distance d3, prédéfinie, est une distance minimale que l'on souhaite respecter de manière à limiter le risque que l'extrémité du plateau 23 vienne interférer avec les aubes 5.

La distance d4 est la distance minimale obtenue lorsque le poteau 25 vient buter contre la partie inférieure de la lèvre 13 par l'intermédiaire d'une butée en caoutchouc 35.

Comme on peut le voir sur la figure 1, lorsque la structure externe 11 se trouve en position de fonctionnement normal, le chariot 17 permet à un opérateur d'entrer à l'intérieur de l'entrée d'air 9 et d'accéder aisément et notamment aux aubes 5 de la soufflante 3.

Dans la position intermédiaire de maintenance représentée à la figure 2, la structure externe 11 de l'entrée d'air a coulissé en amont de la virole acoustique 15 d'une certaine distance d5, laquelle se répercute sur la distance de l'extrémité du plateau 23 par rapport aux aubes 5.

En position extrême de maintenance, (figure 3), cette distance augmente pour passer à une valeur d6, augmentant d'autant l'éloignement de l'extrémité du plateau 23 des aubes 5.

Dans cette position extrême de maintenance, la virole acoustique 15 se trouve dans le prolongement du plateau 23 et l'on peut envisager que cette virole soit conçue de manière suffisamment résistante pour permettre à un opérateur de marcher dessus afin d'atteindre les aubes 5 de la soufflante 3.

De manière avantageuse, on prévoira des freins permettant de bloquer les roues 21, de manière à immobiliser le chariot 17 par rapport à l'entrée d'air, lors des opérations de maintenance.

On notera que l'on prendra soin de concevoir le chariot selon l'invention de manière que le centre de gravité de l'ensemble formé par un opérateur et par le plateau 23 se projette sur le sol toujours à l'intérieur du polygone défini par les points d'appui de ce chariot sur le sol : on évite de la sorte tout risque de basculement de ce chariot.

Le mode de réalisation des figures 5 et 6 diffère du précédent en ceci que le plateau 3 est plus long.

Plus précisément, la longueur d1 de ce plateau est sensiblement égale à la distance horizontale d2 séparant la partie inférieure de la lèvre 13 des aubes 5 de la soufflante 3 lorsque la structure externe 11 se trouve dans sa position extrême de maintenance (représentée en trait continu sur la figure 6), diminuée de la distance d3 indiquée plus haut, et augmentée de la distance d4 indiquée plus haut.

Comme cela est visible sur la figure 6, ce deuxième mode de réalisation permet de placer le plateau 23 au-dessus de la virole acoustique 15 y compris lorsque la structure externe 11 se trouve en position extrême de maintenance (figure 6).

Lorsque cette structure externe 11 se trouve en position de fonctionnement normal (figure 5), il existe un risque pour que l'extrémité du plateau 23 vienne buter contre les aubes 5 : c'est pourquoi on prévoit de placer une butée en caoutchouc 37 à l'extrémité de ce plateau (voir figure 5').

Ce deuxième mode de réalisation convient en particulier lorsque la virole 15 n'est pas adaptée pour supporter le poids d'un opérateur.

Le troisième mode de réalisation représenté sur les figures 7 à 9 diffère du premier mode de réalisation en ceci que le plateau 23 incorpore un tiroir 39 monté coulissant par rapport à ce plateau, entre une position rétractée (figure 7), conférant à ce plateau une longueur sensiblement égale à celle du premier mode de réalisation, et une position étirée (figure 9), conférant à ce plateau une longueur sensiblement égale à celle du deuxième mode de réalisation.

Bien entendu, toutes les positions intermédiaires du tiroir 39 entre ces deux positions extrêmes sont envisageables (voir figure 8).

Ce troisième mode de réalisation est très flexible, puisqu'il permet d'adapter la longueur du plateau 23 à la position effective de la structure externe 11 par rapport au carter de soufflante 7.

Ce troisième mode de réalisation permet de franchir la virole acoustique 15 quelle que soit la position de la structure externe 11, tout en limitant les risques de butée de l'extrémité du plateau contre les aubes 5, comme c'est le cas pour le deuxième mode de réalisation (voir figure 5).

Comme cela est visible sur la figure 10, le tiroir 39 peut être monté coulissant sur le plateau 23 par l'intermédiaire de moyens de roulement tels que des rouleaux 41 circulant à l'intérieur de rails 43.

Comme représenté sur les figures 10a et 10b, on peut envisager des moyens d'indexation de la position du tiroir 39 par rapport au plateau 23, de tels moyens pouvant comprendre typiquement une ou plusieurs tirette(s) à ressort 45 montée(s) sur le tiroir 39, et apte(s) à coopérer avec les orifices 47 formés dans le plateau 23.

Selon une variante représentée sur les figures 10c, 10d, 10e, le blocage du tiroir 39 par rapport au plateau 23 peut être obtenu au moyen d'une ou plusieurs lame(s) élastique(s) 49 fixée(s) sur le plateau 23, et coopérant avec des crans d'indexation 51, formés dans le tiroir 39.

Sur les figures 11 et 12, on a représenté des moyens de manutention de la structure externe, installés sur un chariot conforme au premier mode de réalisation.

Il va de soi que ces moyens de manutention peuvent également être installés sur un chariot conforme au deuxième ou au troisième mode de réalisation selon l'invention.

Ces moyens de manutention comprennent un berceau 53 monté sur la base 19 du chariot 17 par l'intermédiaire d'un système 55 permettant tant un réglage de la hauteur de ce berceau qu'un réglage de son assiette.

Un tel système ne sera pas décrit plus en détail ici, car il relève des connaissances générales du technicien susceptible de concevoir des appareils de levage et de manutention.

Un tel système peut fonctionner avec des moyens mécaniques (pignons et crémaillères par exemple) ou hydrauliques ou encore pneumatiques.

Le berceau 53 comporte un point d'accroche arrière 57 et deux points d'accroche latéraux 59a, 59b, situés respectivement aux extrémités de deux bras symétriques 61 a, 61 b.

Les trois points d'accroche 57, 59a, 59b sont conçus pour pouvoir coopérer avec des éléments d'accrochage disposés à la périphérie de la structure externe 11.

Comme on peut le comprendre, le berceau 53 permet de déposer la structure externe 11 sans outillage supplémentaire par rapport au chariot 17.

Bien entendu, la géométrie du berceau 53 et la disposition des points d'accrochage sur la structure externe 11 sont conçues de manière à optimiser la position du centre de gravité de la structure externe 11 par rapport à ce berceau 53, afin d'obtenir une stabilité maximale lors des opérations de manutention de cette structure externe.

L'installation du berceau 53 sur le chariot 17 a pour effet d'augmenter sensiblement l'encombrement notamment latéral de ce chariot.

C'est pourquoi on peut envisager une variante représentée sur les figures 13 et 14, dans laquelle les deux bras 61 a, 61 b du berceau 53 peuvent être montés mobiles entre une position déployée (figure 13) et une position repliée (figure 14). La position repliée peut être obtenue par exemple en faisant coulisser les deux bras 61 a, 61 b vers l'intérieur du chariot.

Comme cela est visible sur les figures 15 et 16, on peut également prévoir que le berceau 53 soit adapté pour assurer des opérations de manutention de la virole acoustique 15.

Cette virole acoustique étant située plus haut que la structure externe 11, et présentant un diamètre inférieur à celui de cette structure, il faut d'une part prévoir que le point d'appui arrière 57 du berceau 53 soit surélevé par rapport à la situation représentée sur les figures 11 à 14, et d'autre part que les deux bras 61 a, 61 b puissent passer de la position représentée en pointillés sur la figure 16 à la position représentée en trait continu sur cette figure.

Plus précisément, comme cela est visible sur la figure 16, les deux bras 61 a, 61 b sont rabattus vers le haut de manière à pouvoir enserrer correctement la virole acoustique 15.

Comme on peut le comprendre à la lumière de ce qui précède, le fait d'installer des moyens de manutention sur le chariot selon l'invention est très intéressant car on obtient de la sorte un outillage permettant à la fois de positionner de manière très précise la structure externe 11 ou la virole acoustique 15 par rapport au carter de soufflante 7, et d'entrer à l'intérieur de l'entrée d'air 9.

On peut noter que le berceau 53 peut être monté de manière fixe sur le chariot 17, ou bien de manière amovible.

On peut également noter que l'on peut envisager que le système de réglage 55 soit automatique ou manuel.

Comme on peut le comprendre à la lumière de la description qui précède, le chariot selon l'invention offre un moyen très performant d'accès à l'intérieur d'une entrée d'air de nacelle, tant en ce qui concerne la sécurité du personnel que la protection des organes sensibles situés dans la zone de cette entrée d'air.

Lorsque ce chariot est équipé de moyens de manutention de l'entrée d'air, il offre un moyen commode et précis de pose/dépose de cette entrée d'air, permettant de s'affranchir d'un outillage spécifique.

Bien entendu, la présente invention n'est nullement limitée aux modes de réalisation décrits et représentés, fournis à titre de simples exemples.

C'est ainsi par exemple que le chariot selon l'invention pourrait être utilisé pour une entrée d'air classique, dans laquelle la lèvre est rapportée sur la structure externe, et non pas intégrée à celle-ci, et/ou dans laquelle l'ensemble structure externe + lèvre n'est pas monté coulissant par rapport au carter de soufflante.

## Revendications

1. Chariot de maintenance (17) pour entrée d'air (9) de nacelle pour turboréacteur d'aéronef, comprenant :
- une base (19) et un plateau (23) monté en porte-à-faux sur cette base (19), adapté pour pénétrer sans contact à l'intérieur de ladite entrée d'air (9), et **caractérisé en ce qu'**il comprend en plus,
- un berceau (53) de support de ladite entrée d'air (9), monté sur ladite base (19), et de hauteur réglable.

2. Chariot (17) selon la revendication 1, **caractérisé en ce que** ledit berceau (53) comprend un point d'appui arrière (57) et deux points d'appui latéraux (59a, 59b) situés aux extrémités de deux bras symétriques (61a, 61 b).

3. Chariot (17) selon la revendication 2, **caractérisé en ce que** lesdits bras (61a, 61b) sont mobiles entre une position déployée et une position repliée.

4. Chariot (17) selon l'une quelconque des revendications précédentes, ladite entrée d'air (9) comprenant une lèvre (13) et ledit turboréacteur comprenant une soufflante (3), **caractérisé en ce que** la longueur (d1) de la partie en porte-à-faux dudit plateau (23) est au moins égale à la distance horizontale (d2) séparant le bord inférieur de ladite lèvre (13) des aubes (5) de ladite soufflante (3), diminuée d'une distance minimale de sécurité (d3) de l'extrémité dudit plateau (23) par rapport auxdites aubes (5), est augmentée d'une distance minimale de butée (d4) dudit chariot (17) contre ladite lèvre (13).

5. Chariot (17) selon la revendication 4, caractérisé en que la longueur (d1) dudit plateau (23) est sensiblement égale à la distance horizontale (d2) séparant le bord inférieur de ladite lèvre (13) des aubes (5) de ladite soufflante (3) lorsque ladite entrée d'air (9) se trouve en position de fonctionnement, diminuée de ladite distance minimale de sécurité (d3) et augmentée de ladite distance minimale de butée (d4).

6. Chariot (17) selon la revendication 4 particulièrement adapté au cas où ladite entrée d'air (9) comprend une virole acoustique (15) fixée sur un carter (7) de ladite soufflante (3) et une structure externe (11) intégrant ladite lèvre (13), montée coulissante par rapport à ladite virole acoustique (15) entre une position de fonctionnement, dans laquelle ladite lèvre (13) vient dans le prolongement de ladite virole acoustique (15), et une position extrême de maintenance, dans laquelle ladite lèvre (13) est écartée de ladite virole acoustique (15), **caractérisé en ce que** la longueur dudit plateau (23) est sensiblement égale à la distance horizontale (d2) séparant le bord inférieur de ladite lèvre (13) des aubes (5) de ladite soufflante (3) lorsque ladite structure externe (11) se trouve dans sa position extrême de maintenance, diminuée de ladite distance minimale de sécurité (d3) et augmentée de ladite distance minimale de butée (35).

7. Chariot (17) selon la revendication 4 particulièrement adapté au cas où ladite entrée d'air comprend une virole acoustique (15) fixée sur un carter (7) de ladite soufflante (3) et une structure externe (11) intégrant ladite lèvre (13), montée coulissante par rapport à ladite virole acoustique (15) entre une position de fonctionnement, dans laquelle ladite lèvre (13) vient dans le prolongement de ladite virole acoustique (15), et une position extrême de maintenance, dans laquelle ladite lèvre (13) est écartée de ladite virole acoustique (15), **caractérisé en ce que** ledit plateau (23) comprend un tiroir (39) mobile entre une position rétractée conférant audit plateau (23) une longueur sensiblement égale à la distance horizontale (d2) séparant le bord inférieur de ladite lèvre (13) des aubes (5) de ladite soufflante (3) lorsque ladite structure externe (11) se trouve dans sa position de fonctionnement normal, diminuée de ladite distance minimale de sécurité (d3) et augmentée de ladite distance minimale de butée (35), et une position étirée conférant audit plateau (23) une longueur sensiblement égale à la distance horizontale (d2) séparant le bord inférieur de ladite lèvre (13) des aubes (5) de ladite soufflante (3) lorsque ladite structure externe (11) se trouve dans sa position extrême de maintenance, diminuée de ladite distance minimale de sécurité (d3) et augmentée de ladite distance minimale de butée (35).

8. Chariot (17) selon l'une des revendications 6 ou 7 dépendant de l'une des revendications 2 ou 3, **caractérisé en ce que** lesdits bras (61 a, 61 b) sont réglables de manière à pouvoir coopérer tant avec ladite structure externe (11) qu'avec ladite virole acoustique (15).

9. Chariot (17) selon la revendication 7, **caractérisé en ce qu'**il comprend des moyens d'indexation (45, 47, 49, 51) de la position dudit tiroir (39).

10. Chariot (17) selon l'une quelconque des revendications précédentes, caractérisé en que ledit plateau (23) est agencé par rapport à ladite base (19) de manière que la projection au soi du centre de gravité de l'ensemble formé par ledit plateau (23) et un opérateur circulant sur ce plateau (23), soit situé à l'intérieur du polygone défini par les points d'appui de ladite base (19) sur le sol.

11. Chariot (17) selon l'une quelconque des revendications précédentes, **caractérisé en ce qu'**il comprend des moyens (21) pour faire rouler ladite base (19) sur le sol.

12. Chariot (17) selon la revendication 11, **caractérisé en ce qu'**il comprend des moyens pour freiner lesdits moyens de roulement (21).

13. Chariot (17) selon l'une quelconque des revendications précédentes, **caractérisé en ce qu'**il comprend un escalier (31) pour accéder audit plateau (23).

14. Chariot (17) selon l'un quelconque des revendications précédentes, **caractérisé en ce qu'**il comprend un garde-corps (33) au moins dans la zone dudit plateau (23).

## Claims

1. A maintenance trolley (17) for an aircraft turbojet engine nacelle air intake (9), including:
- a base (19) and a plate (23) mounted overhanging said base (19), adapted to penetrate the inside of said air intake (9) without contact, and **characterized in that** it also includes
- a support cradle (53) for said air intake (9), mounted on said base (19), and with an adjustable height.

2. The trolley (17) according to claim 1, **characterized in that** said cradle (53) includes a rear bearing point (57) and two side bearing points (59a, 59b) situated at the ends of two symmetrical arms (61 a, 61 b).

3. The trolley (17) according to claim 2, **characterized in that** said arms (61 a, 61 b) are movable between a deployed position and a folded position.

4. The trolley (17) according to any one of the preceding claims, said air intake (9) including a lip (13) and said turbojet engine including a fan (3), **characterized in that** the length (d1) of the part overhanging said plate (23) is at least equal to the horizontal distance (d2) separating the lower edge of said lip (13) from the vanes (5) of said fan (3), decreased by a minimum safety distance (d3) from the end of said plate (23) relative to said vanes (5), and increased by a minimum stop distance (d4) of said trolley (17) against said lip (13).

5. The trolley (17) according to claim 4, **characterized in that** the length (d1) of said plate (23) is substantially equal to the horizontal distance (d2) separating the lower edge of said lip (13) from the vanes (5) of said fan (3) when said air intake (9) is in the operating position, decreased by said minimum safety distance (d3) and increased by said minimum stop distance (d4).

6. The trolley (17) according to claim 4, particularly adapted to the case where said air intake (9) includes an acoustic shroud (15) fastened on a case (7) of said fan (3) and an outer structure (11) incorporating said lip (13), slidingly mounted relative to said acoustic shroud (15) between an operating position, in which said lip (13) extends said acoustic shroud (15), and a maintenance end position, in which said lip (13) is spaced away from said acoustic shroud (15), **characterized in that** the length of said plate (23) is substantially equal to the horizontal distance (d2) separating the lower edge of said lip (13) from the vanes (5) of said fan (3) when said outer structure (11) is in its maintenance end position, decreased by said minimum safety distance (d3) and increased by said minimum stop distance (35).

7. The trolley (17) according to claim 4, particularly adapted to the case where said air intake includes an acoustic shroud (15) fastened on a case (7) of said fan (3) and an outer structure (11) incorporating said lip (13), slidingly mounted relative to said acoustic shroud (15) between an operating position, in which said lip (13) extends said acoustic shroud (15), and a maintenance end position, in which said lip (13) is spaced away from said acoustic shroud (15), **characterized in that** said plate (23) includes a drawer (39) movable between a retracted position given said plate (23) a length substantially equal to the horizontal distance (d2) separating the lower edge of said lip (13) of the vanes (5) of the fan (3) when said outer structure (11) is located in its normal operating position, decreased by said minimum safety distance (d3) and increased by said minimum stop distance (35), and a stretched position giving said plate (23) a length substantially equal to the horizontal distance (d2) separating the lower edge of said lip (13) from the vanes (5) of said fan (3) when said outer structure (11) is in its maintenance end position, decreased by said minimum safety distance (d3) and increased by said minimum stop distance (35).

8. The trolley (17) according to one of claims 6 or 7 dependent on one of claims 2 or 3, **characterized in that** said arms (61 a, 61 b) are adjustable so as to be able to cooperate both with said outer structure (11) and with said acoustic shroud (15).

9. The trolley (17) according to claim 7, **characterized in that** it includes means (45, 47, 49, 51) for indexing the position of the drawer (39).

10. The trolley (17) according to any one of the preceding claims, **characterized in that** said plate (23) is arranged relative to said base (19) so that the projection on the ground of the center of gravity of the assembly formed by said plate (23) and an operator moving on said plate (23) is situated inside the polygon defined by the bearing points of said base (19) on the ground.

11. The trolley (17) according to any one of the preceding claims, **characterized in that** it includes means (21) for making said base (19) roll on the ground.

12. The trolley (17) according to claim 11, **characterized in that** it includes means for braking said rolling means (21).

13. The trolley (17) according to any one of the preceding claims, **characterized in that** it includes a staircase (31) for accessing said plate (23).

14. The trolley (17) according to any one of the preceding claims, **characterized in that** it includes a handrail (33) at least in the zone of said plate (23).

## Patentansprüche

1. Wartungswagen (17) für Lufteinlass (9) einer Gondel eines Turbotriebwerks eines Luftfahrzeugs, der umfasst:
- eine Basis (19) und ein überhängend über dieser Basis (19) montiertes Plateau (23), das ausgebildet ist, um kontaktlos in das Innere des Lufteinlasses (9) einzudringen und **dadurch gekennzeichnet, dass** er ferner umfasst
- ein Haltegestell (53) des Lufteinlasses (9) auf der Basis (19) einstellbarer Höhe.

2. Wagen (17) nach Anspruch 1, **dadurch gekennzeichnet, dass** das Gestell (53) einen hinteren Abstützpunkt (57) und zwei seitliche Abstützpunkte (59a, 59b) umfasst, die sich an den Enden von zwei symmetrischen Armen (61 a, 61 b) befinden.

3. Wagen (17) nach Anspruch 2, **dadurch gekennzeichnet, dass** die Arme (61 a, 61 b) zwischen einer ausgefahrenen und einer eingefahrenen Stellung bewegbar sind.

4. Wagen (17) nach einem der vorangehenden Ansprüche, wobei der Lufteinlass (9) eine Lippe (13) umfasst und das Turbotriebwerk ein Gebläse (3) umfasst, **dadurch gekennzeichnet, dass** die Länge (d1) des überhängenden Abschnitts des Plateaus (23) zumindest gleich dem horizontalen Abstand (d2) ist, der den unteren Rand der Lippe (13) von den Schaufeln (5) des Gebläse (3) trennt, vermindert um einen minimalen Sicherheitsabstand (d3) des Endes des Plateaus (23) im Verhältnis zu den Schaufeln (5), und vergrößert um einen minimalen Anschlagabstand (d4) des Wagens (17) an der Lippe (13).

5. Wagen (17) nach Anspruch 4, **dadurch gekennzeichnet, dass** die Länge (d1) des Plateaus (23) etwa gleich dem horizontalen Abstand (d2) ist, der den unteren Rand der Lippe (13) von den Schaufeln (5) des Gebläses (3) trennt, wenn sich der Lufteinlass (9) in Betriebsstellung befindet, vermindert um den minimalen Sicherheitsabstand (d3) und vergrößert um den minimalen Anschlagabstand (d4).

6. Wagen (17) nach Anspruch 4, der besonders für den Fall geeignet ist, dass der Lufteinlass (9) eine akustische Einfassung (15) umfasst, die auf einem Gehäuse (7) des Gebläses (3) befestigt ist, und eine externe Struktur (11), die die Lippe (13) integriert, die im Verhältnis zu der akustischen Einfassung (15) zwischen einer Betriebsstellung, in der die Lippe (13) in Verlängerung der akustischen Einfassung (15) ist, und einer extremen Wartungsstellung , in der die Lippe (13) von der akustischen Einfassung (15) beabstandet ist, gleitend montiert ist, **dadurch gekennzeichnet, dass** die Länge des Plateaus (23) etwa dem horizontalen Abstand (d2) entspricht, der den unteren Rand der Lippe (13) von den Schaufeln (5) des Gebläses (3) trennt, wenn sich die externe Struktur (11) in ihrer extremen Wartungsstellung befindet, vermindert um den minimalen Sicherheitsabstand (d3) und vergrößert um den minimalen Anschlagabstand (35).

7. Wagen (17) nach Anspruch 4, der besonders für den Fall geeignet ist, dass der Lufteinlass eine akustische Einfassung (15) umfasst, die auf einem Gehäuse (7) des Gebläses (3) befestigt ist, und eine externe Struktur (11), die die Lippe (13) integriert, die im Verhältnis zu der akustischen Einfassung (15) zwischen einer Betriebsstellung, in der die Lippe (13) in Verlängerung der akustischen Einfassung (15) ist, und einer extremen Wartungsstellung, in der die Lippe (13) von der akustischen Einfassung (15) beabstandet ist, gleitend montiert ist, **dadurch gekennzeichnet, dass** das Plateau (23) einen Auszug (39) umfasst, der zwischen einer eingeschobenen Stellung, die dem Plateau (23) eine Länge verleiht, die etwa dem horizontalen Abstand entspricht (d2), der den inneren Rand der Lippe (13) von den Schaufeln (5) des Gebläses (3) trennt, wenn sich die externe Struktur (11) in ihrer normalen Betriebsstellung befindet, vermindert um den minimalen Sicherheitsabstand (d3) und vergrößert um den minimalen Abstand des Anschlags (35), und einer ausgezogenen Stellung, die dem Plateau (23) eine Länge verleiht, die etwa dem horizontalen Abstand (d2) entspricht, der den unteren Rand der Lippe (13) von den Schaufeln (5) des Gebläses (3) trennt, wenn sich die externe Struktur (11) in ihrer extremen Wartungsstellung befindet, vermindert um den minimalen Sicherheitsabstand (d3) und vergrößert um den minimalen Abstand des Anschlags (35), bewegbar ist.

8. Wagen (17) nach einem der Ansprüche 6 oder 7 in Abhängigkeit von einem der Ansprüche 2 oder 3, **dadurch gekennzeichnet, dass** die Arme (61 a, 61 b) derart einstellbar sind, dass sie sowohl mit der externen Struktur (11) als auch mit akustischer Einfassung (15) zusammenarbeiten können.

9. Wagen (17) nach Anspruch 7, **dadurch gekennzeichnet, dass** er Sicherungsmittel (45, 47, 49, 51) der Position des Auszugs (39) umfasst.

10. Wagen (17) nach einem der vorangehenden Ansprüche, **dadurch gekennzeichnet, dass** das Plateau (23) im Verhältnis zur Basis (19) derart ausgebildet ist, dass sich die Bodenprojektion des Schwerkraftzentrums der Gruppe, die von dem Plateau (23) und einem Bediener, der sich auf diesem Plateau (23) bewegt, in dem Polygon befindet, das von den Abstützpunkten der Basis (19) auf dem Boden gebildet wird.

11. Wagen (17) nach einem der vorangehenden Ansprüche, **dadurch gekennzeichnet, dass** er Mittel (21) umfasst, damit die Basis (19) auf dem Boden rollt.

12. Wagen (17) nach Anspruch 11, **dadurch gekennzeichnet, dass** er Mittel umfasst, um die Rollmittel (21) zu bremsen.

13. Wagen (17) nach einem der vorangehenden Ansprüche, **dadurch gekennzeichnet, dass** er eine Treppe (31) umfasst, um auf das Plateau (23) zu gelangen.

14. Wagen (17) nach einem der vorangehenden Ansprüche, **dadurch gekennzeichnet, dass** er zumindest im Bereich des Plateaus (23) ein Geländer (33) umfasst.
